# EUROPEAN PATENT SPECIFICATION

(11) **EP 3 092 699 B1**
(45) Date of publication and mention of the grant of the patent: **27.02.2019**
(21) Application number: 14878001.8
(22) Date of filing: 10.01.2014
(51) Int. Cl.: H02J 7/00

(54) **APPARATUS AND METHOD FOR TRANSFERRING ELECTRICAL POWER**
VORRICHTUNG UND VERFAHREN ZUR ÜBERTRAGUNG ELEKTRISCHER ENERGIE
APPAREIL ET PROCÉDÉ DE TRANSFERT D'UNE PUISSANCE ÉLECTRIQUE

(43) Date of publication of application: 16.11.2016
(73) Proprietor: Nokia Technologies Oy, 02610 Espoo (FI)
(72) Inventor: HU, Wei, Beijing 100016 (CN); HAN, Jianhui, Beijing 100012 (CN)
(74) Representative: Whiting, Gary
(86) International application number: PCT/CN2014/070446
(87) International publication number: WO 2015/103767

(56) References cited:
- EP-A1- 0 546 652
- WO-A1-2009/144370
- WO-A2-2010/027422
- CN-A- 1 692 344
- CN-A- 101 252 313
- CN-A- 101 299 164
- CN-A- 101 449 447
- CN-A- 101 663 634
- CN-A- 102 545 296
- CN-A- 103 181 054
- CN-A- 103 427 451
- US-A1- 2009 200 982
- US-A1- 2011 074 360
- US-A1- 2013 009 470

## Description

### TECHNICAL FIELD

Embodiments of the present invention generally relate to the field of electrical circuits, and more specifically, to an apparatus and method for transferring electrical power between portable devices.

### BACKGROUND

Universal Serial Bus (USB) On-The-Go (OTG) is an extension of USB specifications for connecting devices to each other. Compared with a conventional USB technique, the USB OTG technique allows a USB device, such as a Personal Digital Assistant (PDA) or a cell phone, to act as either a host or a slave when communicating with another USB device. In other words, when two USB OTG devices are connected via a USB cable, data may be transferred from either of the USB OTG devices to the other.
WO 2014/022969, as well as the corresponding application CN103181054, discloses an apparatus including: a battery electric core, a switch device, a voltage boost circuit, a state detection circuit, and a logic control circuit. The switch device is connected in a current path of the battery electric core. The voltage boost circuit is connected in parallel to the current path, and is configured to boost an output voltage of the battery electric core. The state detection circuit is configured to detect a state of the battery electric core and a state of the apparatus, and generate a state signal. The logic control circuit is configured to receive the state signal from the state detection circuit, and control the switch device according to the state signal, when the battery electric core is in an abnormal charging state, control the switch device to turn off the current path, and when the voltage boost circuit is not required to work, control the switch device to turn on the current path.

Further relevant background art is reflected by: CN101252313, US2013/009470 and EP0546652.

### SUMMARY

The present invention is set out in the appended set of claims.

The embodiments and/or examples of the present disclosure which are not covered by the appended claims are considered as not being part of the present invention.

According to embodiments of the present invention, battery power may be directly transferred from one portable device to another portable device, thereby avoiding power losses and a pre-charge time delay of a battery.

Other features and advantages of the embodiments of the present invention will also be understood from the following description of specific embodiments when read in conjunction with the accompanying drawings, which illustrate, by way of example, the principles of embodiments of the present invention.

### BRIEF DESCRIPTION OF THE DRAWINGS

The above and other aspects, features, and benefits of various embodiments of the present invention will become more fully apparent, by way of example, from the following detailed description and the accompanying drawings, in which:
FIG. 1 shows an exemplary charge process between two portable devices;
FIG. 2 shows a USB OTG linear charger in the prior art;
FIG. 3 shows a USB OTG switching charger in the prior art;
FIG. 4 is an exemplary graph showing efficiency of a USB OTG switching charger as shown in FIG. 3;
FIG. 5 is a schematic diagram showing a part of a portable device according to an embodiment of the present invention;
FIG. 6 is a schematic diagram showing a single pole, double throw switch according to an embodiment of the present invention;
FIG. 7 is a schematic diagram of current monitoring means according to an embodiment of the present invention;
FIG. 8 is a schematic diagram of voltage monitoring means according to an embodiment of the present invention;
FIG. 9 is a flow chart of a method 900 for transferring electrical power between portable devices according to an embodiment of the present invention;
FIG. 10 shows an exemplary operation method 1000 for transferring electrical power between portable devices according to an embodiment of the present invention;
FIG. 11 is a flow chart of a method 1100 for transferring electrical power between portable devices according to an embodiment of the present invention; and
FIG. 12 shows an exemplary operation method 1000 for transferring electrical power between portable devices according to an embodiment of the present invention.

### DETAILED DESCRIPTION

Embodiments of the present invention provide means to transfer electrical power between portable devices, wherein a portable device directly outputs power of a battery therein to another portable device without voltage conversion.

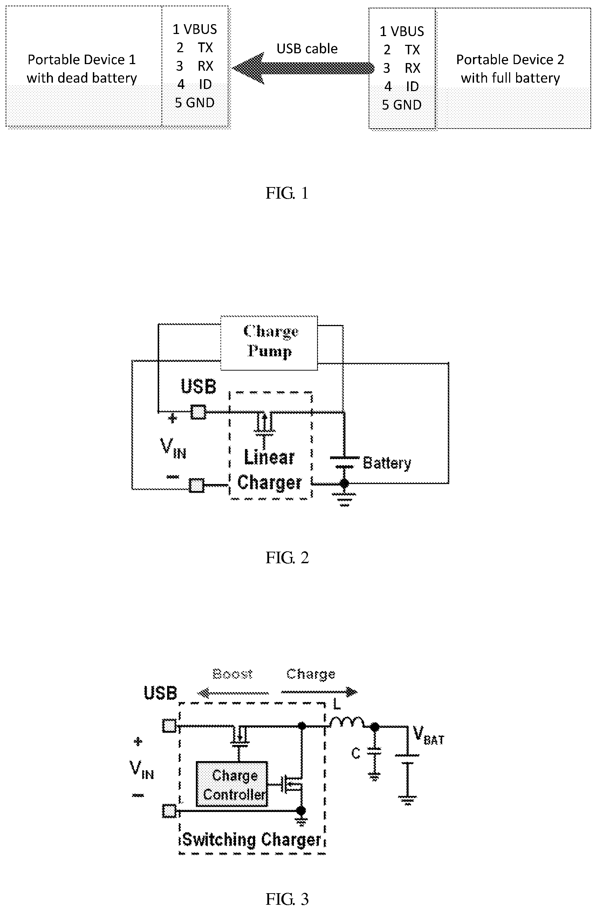

In addition to data transfer, there may be electrical power transfer between USB OTG devices. When a USB OTG cell phone is dead, another USB OTG cell phone can charge the dead cell phone using its own battery power. FIG. 1 shows an exemplary charge process between two portable devices. As shown in FIG. 1, a portable device 1 with a dead battery is charged by a portable device 2 with a full battery, and the battery power is transferred through a USB cable.

Most portable devices use a single-cell lithium ion or lithium polymer battery with a voltage of 3.3-4.2V. According to USB OTG specifications, however, the voltage at a VBUS pin of a USB connector shown in FIG. 1 is 4.75-5.25V. Thus, the voltage outputted from the battery of the portable device 2 (e.g. 3.3-4.2V) is required to be converted to a higher voltage defined according to USB OTG specifications (e.g. 4.75-5.25V) before it is outputted to the USB connector. Likewise, before the voltage from the USB connector is inputted to the battery, there is required a voltage reduction.

Generally, there are two USB OTG charge modes: a linear mode (as shown in FIG. 2) and a switching mode (as shown in FIG. 3). In the linear mode of FIG. 2, a charge pump is used for increasing the battery voltage, and a Metal Oxide Semiconductor Field Effect Transistor (MOSFET) is used for charging the battery. In the switching mode of FIG. 3, a combination of MOSFETs is used for either boost or charging under control of a charge controller.

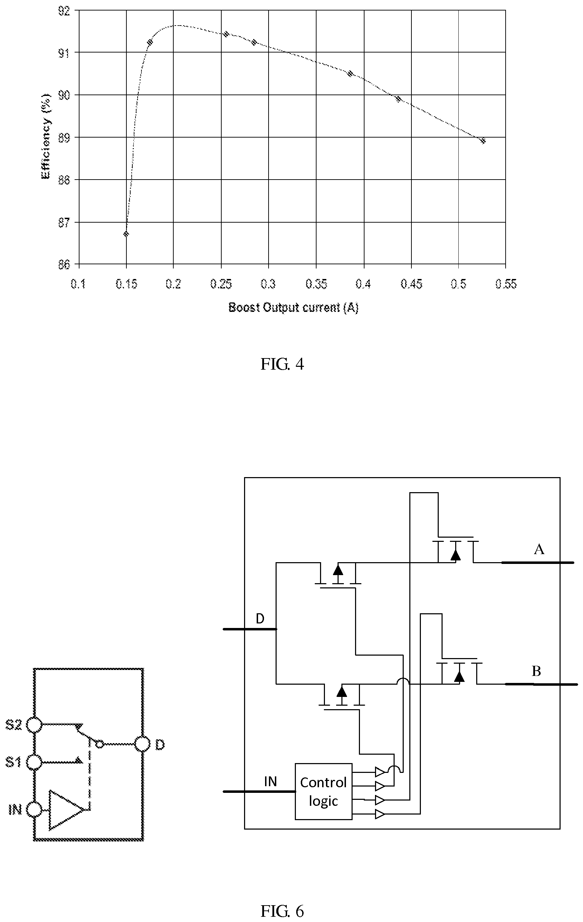

Disadvantageously, the above voltage conversion may result in power losses, including voltage losses and current losses. The switching mode generally has a little higher efficiency than the linear mode. FIG. 4 is an exemplary graph showing efficiency of a USB OTG switching charger as shown in FIG. 3. As shown in FIG. 4, the efficiency is around 90%. If a device with USB OTG output charges another device with an internal switching charger, the total energy transfer efficiency from one battery to another battery is almost less than 90% × 90%=81%.

In addition to power losses, there may be a pre-charge time delay of a battery in the existing USB OTG charging solution. For example, when a battery of a portable device is running low, for example, the battery voltage is lower than 2.8V, an end user may have to wait for using the portable device until the battery is recharged to a certain voltage, such as 3.3V.

Example embodiments of the present invention will be described in detail as below.

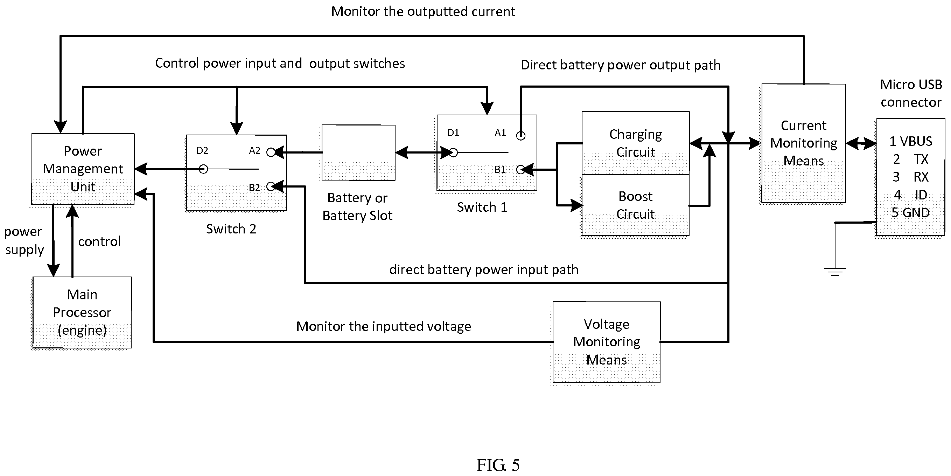

FIG. 5 is a schematic diagram showing a part of a portable device according to an embodiment of the present invention. Herein, the portable device may be any portable battery-powered device supporting USB OTG, such as a PDA, a cell phone, a handheld computer, a tablet, or the like. Furthermore, the operating voltage of the battery may be lower than the voltage defined by USB OTG specifications.

As shown in FIG. 5, the portable device may comprise a main processor and a power management unit (PMU). The PMU supplies power to the main processor, and in turn the main processor controls the PMU. The portable device also comprises a USB connector for plugging a USB cable.

According to embodiments of the present invention, the portable device may comprise two switches with one for power output (labeled as Switch 1 in FIG. 5) and the other for power input (labeled as Switch 2 in FIG. 5). An example of the switches is a single pole, double throw switch, and the implementation thereof is shown in FIG. 6. As shown in FIG. 6, control logic controls whether a path between a terminal D and a terminal A or a path between the terminal D and a terminal B is closed.

In embodiments of the present invention, the control logic of the switch is further controlled by the PMU. The PMU generates two control signals, and outputs them to respective switches, wherein each control signal has two states for indicating whether to enable direct power transfer or not. In response to the states, the control logic controls to close or break respective paths.

Hereinafter, exemplary operation processes of the PMU and the two switches in cases of power output and power input according to embodiments of the present invention are described with respect to Figs. 5, 7 and 8.

In a case of power output, as shown in FIG. 5, a terminal D1 of Switch 1 is coupled to a battery or battery slot, a terminal A1 of Switch 1 is coupled to a USB connector, and a terminal B1 of Switch 1 is coupled to a boost circuit. The PMU generates a power output control signal to control which one of the terminals A1 and B1 contacts the terminal D1 of Switch 1.

According to embodiments of the present invention, the power output control signal has two states with one being a direct output state and the other being an indirect output state. When the power output control signal is in a direct output state, the terminal D1 contacts the terminal A1, and therefore the path between the battery (or battery slot) and the USB connector is closed. In this way, power may be outputted from the battery or the battery slot to the USB connector directly, thereby avoiding power losses, for example, due to voltage conversion.

Furthermore, when the power output control signal is in an indirect output state, the terminal D1 contacts the terminal B1, and therefore the path between the battery (or battery slot) and the boost circuit is closed. Thus, a voltage outputted from the battery or the battery slot, such as 3.3-4.2V, may be increased by the boost circuit to a higher voltage such as the voltage defined by USB OTG specifications (e.g., 4.75-5.25V), and then outputted to the USB connector. In this way, the portable device according to the present invention may be compatible with the USB OTG output technique.

In an embodiment of the present invention, the PMU may determine the state of the power output control signal to be generated based on a user instruction. For example, after the portable device 2 having power is connected to the portable device 1 out of power via a USB cable (as shown in FIG. 1), an end user of the device 2 may operate a menu displayed on the device 2, and instruct whether to directly output the battery power to the device 1. If the end user enables the device 2 to directly output the battery power, the PMU may generates the power output control signal being in the direct output state.

Once the portable device 2 starts directly outputting the battery power to the portable device 1, a current outputted from the device 2 to the USB cable may reflect the reliability of the power transfer. For example, if the voltage outputted from the device 2 is not high enough for the device 1, the power transfer path between the two devices is actually broken and the outputted current may be very small. If the internal circuit of the device 1 is short circuit, the outputted current may be unacceptably large so that the direct connection between the devices 1 and 2 via a USB cable is unsafe.

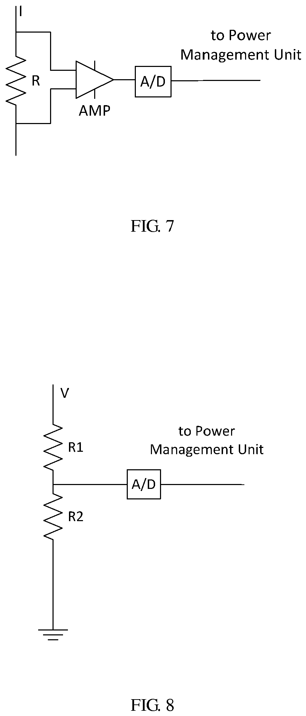

In an embodiment of the present invention, as shown in FIG. 5, the portable device comprises current monitoring means configured to monitor a current outputted to the USB connector. An exemplary implementation of current monitoring means according to an embodiment of the present invention is shown in FIG. 7. In FIG. 7, a current monitoring circuit monitors the current outputted to the USB connector, and outputs the monitored result to the PMU. Although the current monitoring means is shown as a separate circuit from the PMU in FIG. 5 or 7, a person skilled in the art may conceive that the current monitoring function may be achieved by the PMU, and the current monitoring means may be integrated into the PMU.

According to an embodiment of the present invention, during the power output, the PMU continues to determine the state of the power output control signal to be generated based on the monitored current. When the monitored current is within a current range between a minimum current Imin and a maximum current Imax, the PMU determines that the power output control signal to be generated is in the direct output state. When the monitored current is less than Imin, the PMU determines that the power output control signal to be generated is in the indirect output state. For the purpose of ensuring the continuous path between the devices 1 and 2, Imin may be larger than a leakage current on the USB connector, for example, 10mA. Furthermore, for the purpose of ensuring safe connection between the devices 1 and 2, Imax may be less than a maximum output current for over-current protection, for example, 800 mA. In addition, when the monitored current is more than the maximum current, the PMU will generate no power output control signal. In response to this, Switch 1 breaks the path between the battery or the battery slot and the USB connector or the path between the battery or the battery slot and the boost circuit, thereby ensuring safe connection between the devices 1 and 2.

The case of power output is described with respect to Figs. 5 and 7 above. Now, the description of a case of power input will be given with respect to Figs. 5 and 8.

As described above, Switch 2 in FIG. 5 is used for power input. As shown in FIG. 5, a terminal D2 is coupled to the PMU, a terminal B2 is coupled to the USB connector, and a terminal A2 is coupled to the battery or battery slot. Similarly, the PMU generates a power input control signal to control which one of the terminals A2 and B2 contacts the terminal D2. The power input control signal also has two states, wherein one is a direct input state and the other is an indirect input state.

When the power input control signal is in a direct input state, the terminal D2 contacts the terminal B2, and therefore the path between the USB connector and the PMU is closed. In this way, power may be inputted from the USB connector to the PMU directly, and therefore power losses, for example, due to voltage conversion may be avoided, and the dead portable device may be used immediately without a pre-charge time delay of the battery.

When the power output control signal is in an indirect output state, the terminal D2 contacts the terminal A2, and therefore the path between the battery (or battery slot) and the PMU is closed. In this situation, the battery is also connected with a charging circuit so that the battery may be charged by the charging circuit with the power inputted from the USB connector, and further supply power to the PMU. In this way, the portable device may be compatible with the USB OTG charge technique.

In an embodiment of the present invention, the PMU may determine the state of the power input control signal to be generated based on a voltage inputted from the USB connector. As shown in FIG. 5, the portable device comprises voltage monitoring means configured to monitor a voltage inputted from the USB connector.

According to an embodiment of the present invention, after the portable device 1 is out of power and connected with the portable device 2 having power via a USB cable, the voltage monitoring means of the device 1 then monitors the voltage at a VBUS pin of the USB connector. FIG. 8 shows an example of voltage monitoring means according to an embodiment of the present invention. Likewise, the voltage monitoring means may be separate from the PMU as shown in FIG. 8, and alternatively it may be integrated into the PMU.

The PMU then may determine the state of the power input control signal to be generated based on the monitored voltage. When the monitored voltage is within a first voltage range, the PMU determines that the power output control signal to be generated is in the direct output state. When the monitored voltage is within a second voltage range, the PMU determines that the power output control signal to be generated is in the indirect output state. Herein, the first voltage range is based on an operating voltage of the battery, such as 3.3-4.2V, and the second voltage range is based on the USB voltage, such as 4.75-5.25V. If the voltage inputted from the USB connector falls within other voltage ranges, the PMU will generate no power input control signal. Then, in response to no power output control signal, Switch 2 breaks the path between the battery or the battery slot and the USB connector or the path between the battery or the battery slot and the boost circuit in order to ensure safety.

In an embodiment of the present invention, a portable device may comprise only one of the switches either for power output or for power input. If a portable device only comprises a switch for power output, it may directly output battery power to another portable device comprising a switch for power input, and vice versa. According to an embodiment of the present invention, although a portable device with only the switch for power input may not directly output the battery power, it may output the battery power in a USB OTG output mode. In this case, the battery or the battery slot may be fixedly connected to the boost circuit for increasing the voltage outputted from the battery before the voltage is outputted to the USB connector.

If a portable device only comprises a switch for power output, it may directly output battery power, but may not directly obtain power from an outside battery. In such a portable device, the PMU and the battery (or battery slot) are fixedly connected with each other.

Alternatively, the switch for power output, such as Switch 1, and the switch for power input, such as Switch 2, may be comprised in a portable device at the same time, as shown in FIG. 5. In this case, during a power output process, the PMU generates the power input control signal in the indirect input state in addition to the power output control signal so that. In response to the power input control signal being in the indirect input state, Switch 2 closes the path between the PMU and the battery or battery slot. Thus, the power supply and control function between the PMU and the battery or battery slot may be achieved. During a power input process, when Switch 2 closes the path between the PMU and the battery (or battery slot), Switch 1 closes the path between the battery and an OTG-enabled charging circuit so that the battery may be charged by the charging circuit with the power inputted from the USB connector and further supply power to the PMU.

As shown in FIG. 5, the charging circuit and the boost circuit are connected in parallel. In another embodiment of the present invention, the two circuits may be integrated together, just as the switching charger shown in FIG. 3. In this way, Switch 1 may close the path the battery and the charging circuit (equivalent to the path between the battery and the boost circuit) in response to the power output control signal being in the indirect output state. Herein, the implementation of the boost circuit and the charging circuit may be based on the existing USB OTG modes, as shown in Figs. 2 and 3.

It should be noted that the implementation of a switch is not limited to a single pole, double throw switch as described above, but may include any type of switches that may achieve an equivalent function. For example, a combination of two single pole, single throw switches may be substituted for a single pole, double throw switch, wherein one single pole, single throw switch controls one path continuous or broken. It also should be noted that the term "couple" refers to any type of connection, including direct connection through wires or indirect connection through another circuit.

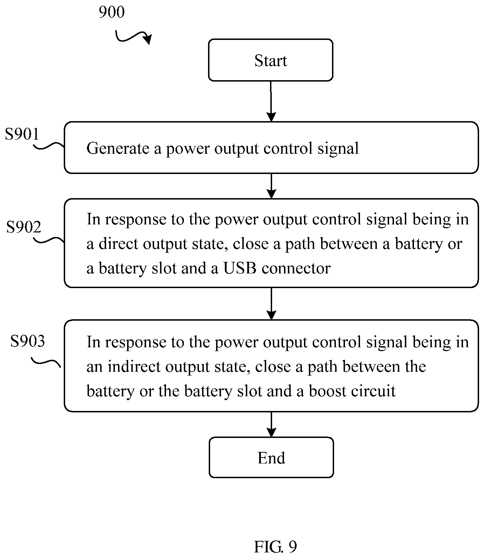

The portable device and the apparatus therein for transferring electrical power according to embodiments of the present invention are described with respect to Figs. 5-8 above. Next, operation method flows according to embodiments of the present invention will be described with respect to Figs. 9-12.

FIG. 9 is a flow chart of a method 900 for transferring electrical power between portable devices according to an embodiment of the present invention.

As shown in FIG. 9, after the method 900 starts, at step S901, a power output control signal is generated. Then, at step S902, in response to the power output control signal being a direct output state, a path between a battery or a battery slot and a USB connector is closed so that power is outputted from the battery to the USB connector directly. In this way, power may be efficiently transferred between portable devices without power losses, for example, due to voltage conversion.

Next, at step S903, in response to the power output control signal being an indirect output state, a path between the battery or the battery slot and a boost circuit is closed so that a voltage outputted from the battery is increased by the boost circuit to a higher voltage and then outputted to the USB connector. By doing so, the portable device enabling a direct output of battery power according to embodiments of the present invention may also support the USB OTG output technique.

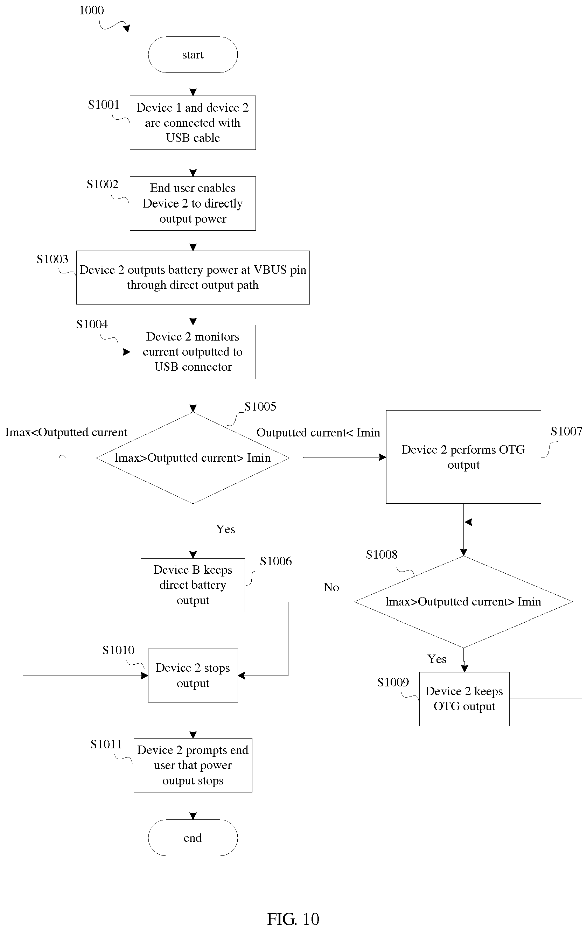

Now, an exemplary operation method 1000 for transferring electrical power between portable devices according to an embodiment of the present invention will be described in detail with respect to FIG. 10.

As shown in FIG. 10, after a portable device 1 out of power and a portable device 2 having power are connected with a USB cable (S1001), an end user of the device 2 enables the device 2 to directly output battery power (S1002), for example, by manipulating a menu displayed on the device 2.

Then, the device 2 outputs battery power at the VBUS pin of the USB connector through the direct output path between a battery or a battery slot and the USB connector (S1003). According to an embodiment of the present invention, in the device 2, a switch closes the path between a battery or a battery slot and a USB connector in response to a power output control signal which is generated by a power management unit based on a user instruction.

Next, at step S1004, the device 2 monitors a current outputted to the USB connector. It is then determined whether the monitored current is within a current range between Imin and Imax (S1005). If yes, the device 2 keeps direct battery power output (S1006), and continues to monitor the outputted current (S1004). If the monitored current is less than Imin, the device 2 performs USB OTG output (S1007). For example, the device 2 outputs a voltage of 4.75-5.25V at the VBUS pin of the USB connector. Then, the device 2 continues to determine whether the monitored current is within a current range between Imin and Imax (S1008). If yes, the device 2 keeps OTG output for example, of 4.75-5.25V (S1009); otherwise the device 2 stops the output (S1010). If it is determined that the monitored current is more than Imax, the device 2 also stops the output. After stopping the output, the device 2 prompts the end user that the power output has stopped (S1011).

As described in relation to the portable device according to embodiments of the present invention, Imin may be less than a leakage current on the USB connector (for example, 10mA) so that it can be determined that the voltage outputted from the device 2 is high enough for the device 1. Furthermore, for ensuring safe connection between the devices 1 and 2, Imax may be less than a maximum output current for over-current protection (for example, 800 mA).

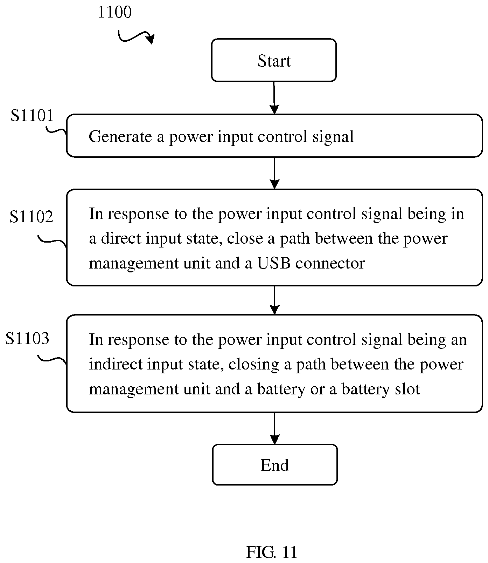

FIG. 11 is a flow chart of a method 1100 for transferring electrical power between portable devices according to an embodiment of the present invention.

As shown in FIG. 11, after the method 1100 starts, at step S1101, a power input control signal is generated. Then, at step S1102, in response to the power input control signal being in a direct input state, a path between the PMU and the USB connector is closed so that power is directly inputted from the USB connector to the PMU. Likewise, in this way, power may be efficiently transferred between portable devices without power losses, for example, due to voltage conversion.

Next, at step S1103, in response to the power input control signal being in an indirect input state, a path between the power management unit and a battery or a battery slot is closed, wherein the battery or battery slot is connected with a charging circuit so that the battery may be charged by the charging circuit with the power inputted from the USB connector and further supply power to the power management unit. By doing so, the portable device enabling a direct output of battery power according to embodiments of the present invention may also support the USB OTG charging technique.

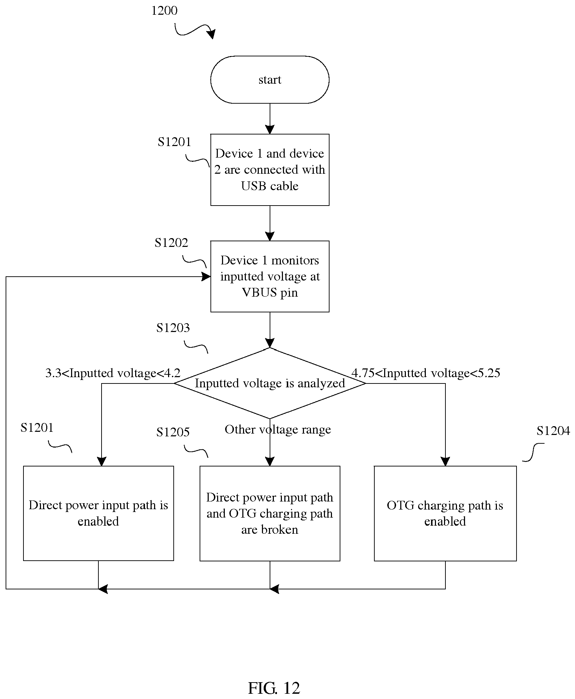

Next, an exemplary operation method 1200 for transferring electrical power between portable devices according to an embodiment of the present invention will be described in detail with respect to FIG. 12.

As shown in FIG. 12, after the portable device 1 out of power and the portable device 2 having power are connected with a USB cable (S1201), the device 1 monitors the inputted voltage at the VBUS pin of the USB connector (S1202). Then, the device 1 analyzes the monitored voltage and determines whether the monitored voltage is within a first voltage range such as an operating voltage of a battery (e.g. 3.3-4.2V) or a second voltage range such as a specified USB voltage (e.g. 4.75-5.25) (S1203). If the monitored voltage is within a first range, the direct power input path in the device 1 is enabled (S1204), and then the device 1 continues to monitor the voltage inputted from the USB connector (S1203). If the monitored voltage is within a second range, the USB OTG charging path is enabled (S1204), and then the device 1 continues to monitor the voltage inputted the USB connector (S1203). By doing so, power losses, for example, due to voltage conversion may be avoided, the dead portable device can be used immediately without a pre-charge time delay, and the USB OTG charge technique can be supported compatibly.

If the monitored voltage is within other voltage range rather than the first and second voltage ranges, the direct power input path and the OTG charging path are both broken (S1205), and the device 1 continues to monitor the voltage inputted the USB connector (S1203).

It should be noted that the methods 900, 1000, 1100 and 1200 may be performed by the portable device described with respect to Figs. 5-8. Therefore, the embodiments related to operation processes, which have been described in relation to the portable device, may also be applied to the methods 900, 1000, 1100 and 1200. For the purpose of brevity, the description of corresponding method steps will be omitted.

It also should be noted that USB OTG is only an example, the implementation of the present invention is not limited to USB OTG specifications, but includes any specification that enables devices to transfer power between each other via a USB cable.

Herein, embodiments of the present disclosure will be described in details through embodiments with reference to the accompanying drawings. While this specification contains many specific implementation details, these details should not be construed as limitations on the scope of any invention or of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable sub-combination.

While operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the described embodiments.

## Claims

1. A method, comprising:
generating (S901), by a power management unit, PMU, a power output control signal;
in response to the power output control signal being in a direct output state, closing (S902) a path between a battery or a battery slot and a Universal Serial Bus, USB, connector so that power is outputted from the battery or the battery slot to the USB connector directly;
in response to the power output control signal being in an indirect output state, closing (S903) a path between the battery or the battery slot and a boost circuit so that a voltage outputted from the battery or the battery slot is increased by the boost circuit to a higher voltage and then outputted to the USB connector;
monitoring a current outputted to the USB connector;
determining the state of the power output control signal to be generated based on the monitored current;
determining that the power output control signal to be generated is in the direct output state when the monitored current is within a current range between a minimum current and a maximum current; and
determining that the power output control signal to be generated is in the indirect output state when the monitored current is less than the minimum current,
wherein the minimum current is a current larger than a leakage current on the USB connector, and the maximum current is a current less than a maximum output current for over-current protection.

2. The method of claim 1, further comprising:
determining the state of the power output control signal to be generated based on a user instruction.

3. The method of claim 1 or claim 2, further comprising:
generating no power output control signal when the monitored current is more than the maximum current; and
in response to no power output control signal, breaking the path between the battery or the battery slot and the USB connector and the path between the battery or the battery slot and the boost circuit.

4. The method of any of claims 1-3, wherein the higher voltage is a voltage defined by USB specifications.

5. A method as claimed in any one of the preceding claims, comprising:
generating (S1101), by the power management unit, a power input control signal;
in response to the power input control signal being in a direct input state, closing (S1102) a path between the power management unit and the Universal Serial Bus connector so that power is inputted from the USB connector to the power management unit directly; and
in response to the power input control signal being an indirect input state, closing (S1102) a path between the power management unit and the battery or the battery slot, the battery or the battery slot being connected with a charging circuit so that the battery is charged by the charging circuit with the power inputted from the USB connector and then the battery or the battery slot supplies power to the power management unit.

6. The method of claim 5 further comprising:
monitoring a voltage inputted from the USB connector; and
determining the state of the power input control signal to be generated based on the monitored voltage.

7. The method of claim 5-6, further comprising:
determining that the power input control signal to be generated is in the direct input state when the monitored voltage is within a first voltage range; and
determining that the power input control signal to be generated is in the indirect input state when the monitored voltage is within a second voltage range,
wherein the first voltage range is based on an operating voltage of the battery, and the second voltage range is based on the voltage defined by the USB specifications.

8. The method of claim 7, further comprising:
generating no power input control signal when the monitored voltage is within other ranges; and
in response to no power input control signal, breaking the path between the power management unit and the USB connector and the path between the power management unit and the battery or the battery slot.

9. An apparatus comprising means for performing the actions of the method of any of claims 1-8.

## Patentansprüche

1. Verfahren, das Folgendes umfasst:
Erzeugen (S901), durch eine Leistungssteuerungseinheit (PMU, power management unit), eines Leistungsausgangssteuerungssignals;
in Reaktion darauf, dass sich das Leistungsausgangssteuerungssignal in einem direkten Ausgangszustand befindet, Schließen (S902) eines Pfades zwischen einer Batterie oder einem Batteriefach und einem USB-Steckverbinder (Universal Serial Bus), sodass Energie von der Batterie oder dem Batteriefach direkt an den USB-Steckverbinder ausgegeben wird;
in Reaktion darauf, dass sich das Leistungsausgangssteuerungssignal in einem indirekten Ausgangszustand befindet, Schließen (S903) eines Pfades zwischen der Batterie oder dem Batteriefach und einer Verstärkungsschaltung, sodass eine Spannung, die von der Batterie oder dem Batteriefach ausgegeben wird, durch die Verstärkungsschaltung auf eine höhere Spannung erhöht und dann an den USB-Steckverbinder ausgegeben wird;
Überwachen eines an den USB-Steckverbinder ausgegebenen Stroms;
Bestimmen des Zustands des zu erzeugenden Leistungsausgangssteuerungssignals basierend auf dem überwachten Strom;
Bestimmen, dass sich das zu erzeugende Leistungsausgangssteuerungssignal in dem direkten Ausgangszustand befindet, wenn der überwachte Strom innerhalb eines Strombereichs zwischen einem minimalen Strom und einem maximalen Strom liegt; und
Bestimmen, dass sich das zu erzeugende Leistungsausgangssteuerungssignal in dem indirekten Ausgangszustand befindet, wenn der überwachte Strom kleiner als ein minimaler Strom ist,
wobei der minimale Strom ein Strom ist, der größer als ein Leckstrom am USB-Steckverbinder ist, und der maximale Strom ein Strom ist, der kleiner als ein maximaler Ausgangsstrom für Überstromschutz ist.

2. Verfahren nach Anspruch 1, das ferner Folgendes umfasst:
Bestimmen des Zustands des zu erzeugenden Leistungsausgangssteuerungssignals basierend auf einer Benutzeranweisung.

3. Verfahren nach Anspruch 1 oder Anspruch 2, das ferner Folgendes umfasst:
Erzeugen keines Leistungsausgangssteuerungssignals, wenn der überwachte Strom größer als der maximale Strom ist; und
in Reaktion auf ein nicht vorhandenes Leistungsausgangssteuerungssignal, Unterbrechen des Pfades zwischen der Batterie oder dem Batteriefach und dem USB-Steckverbinder und des Pfades zwischen der Batterie oder dem Batteriefach und der Verstärkungsschaltung.

4. Verfahren nach einem der Ansprüche 1-3, wobei die höhere Spannung eine durch USB-Spezifikationen definierte Spannung ist.

5. Verfahren nach einem der vorhergehenden Ansprüche, das Folgendes umfasst:
Erzeugen (S1101), durch die Leistungssteuerungseinheit, eines Leistungseingangssteuerungssignals;
in Reaktion darauf, dass sich das Leistungseingangssteuerungssignal in einem direkten Ausgangszustand befindet, Schließen (S1102) eines Pfades zwischen der Leistungssteuerungseinheit und dem USB-Steckverbinder (Universal Serial Bus), sodass Energie vom USB-Steckverbinder direkt in die Leistungssteuerungseinheit eingekoppelt wird; und
in Reaktion darauf, dass sich das Leistungseingangssteuerungssignal in einem indirekten Zustand befindet, Schließen (S1102) eines Pfades zwischen der Leistungssteuerungseinheit und der Batterie oder dem Batteriefach, wobei die Batterie oder das Batteriefach mit einer Ladeschaltung verbunden ist, sodass die Batterie durch die Ladeschaltung mit der von dem USB-Steckverbinder eingegebenen Energie geladen wird, woraufhin die Batterie oder das Batteriefach der Leistungssteuerungseinheit Energie zuführt.

6. Verfahren nach Anspruch 5, das ferner Folgendes umfasst:
Überwachen einer von dem USB-Steckverbinder eingekoppelten Spannung; und
Bestimmen des Zustands des zu erzeugenden Leistungseingangssteuerungssignals basierend auf der überwachten Spannung.

7. Verfahren nach Anspruch 5-6, das ferner Folgendes umfasst:
Bestimmen, dass sich das zu erzeugende Leistungseingangssteuerungssignal in dem direkten Ausgangszustand befindet, wenn die überwachte Spannung innerhalb eines ersten Spannungsbereichs liegt; und
Bestimmen, dass sich das zu erzeugende Leistungseingangssteuerungssignal in dem indirekten Ausgangszustand befindet, wenn die überwachte Spannung innerhalb eines zweiten Spannungsbereichs liegt,
wobei der erste Spannungsbereich auf einer Betriebsspannung der Batterie basiert und der zweite Spannungsbereich auf der durch die USB-Spezifikationen definierten Spannung basiert.

8. Verfahren nach Anspruch 7, das ferner Folgendes umfasst:
Erzeugen keines Leistungseingangssteuerungssignals, wenn die überwachte Spannung innerhalb anderer Bereiche liegt; und
in Reaktion auf ein nicht vorhandenes Leistungseingangssteuerungssignal, Unterbrechen des Pfades zwischen der Leistungssteuerungseinheit und dem USB-Steckverbinder und des Pfades zwischen der Leistungssteuerungseinheit und der Batterie oder dem Batteriefach.

9. Einrichtung, umfassend Mittel zum Durchführen der Aktionen des Verfahrens nach einem der Ansprüche 1-8.

## Revendications

1. Procédé comprenant :
la génération (S901), par une unité de gestion de puissance, PMU, d'un signal de commande de sortie de puissance ;
en réponse au fait que le signal de commande de sortie de puissance est dans un état de sortie directe, la fermeture (S902) d'un trajet entre une batterie ou un emplacement de batterie et un connecteur de bus série universel, USB, de telle sorte que la puissance est délivrée en sortie de la batterie ou de l'emplacement de batterie au connecteur USB directement ;
en réponse au fait que le signal de commande de sortie de puissance est dans un état de sortie indirecte, la fermeture (S903) d'un trajet entre la batterie ou l'emplacement de batterie et un circuit amplificateur de telle sorte qu'une tension délivrée à partir de la batterie ou de l'emplacement de batterie est augmentée par le circuit amplificateur à une tension supérieure puis délivrée au connecteur USB ;
la surveillance d'un courant délivré au connecteur USB ;
la détermination de l'état du signal de commande de sortie de puissance à générer sur la base du courant surveillé ;
la détermination que le signal de commande de sortie de puissance à générer est dans l'état de sortie directe lorsque le courant surveillé est à l'intérieur d'une plage de courant entre un courant minimal et un courant maximal ; et
la détermination que le signal de commande de sortie de puissance à générer est dans l'état de sortie indirect lorsque le courant surveillé est inférieur au courant minimum,
le courant minimum étant un courant supérieur à un courant de fuite sur le connecteur USB, et le courant maximal étant un courant inférieur à un courant de sortie maximal pour une protection contre les surintensités.

2. Procédé selon la revendication 1, comprenant en outre :
la détermination de l'état du signal de commande de sortie de puissance à générer sur la base d'une instruction d'utilisateur.

3. Procédé selon la revendication 1 ou la revendication 2, comprenant en outre :
la génération d'aucun signal de commande de sortie de puissance lorsque le courant surveillé est supérieur au courant maximal ; et
en réponse à aucun signal de commande de sortie de puissance, la rupture du trajet entre la batterie ou l'emplacement de batterie et le connecteur USB et du trajet entre la batterie ou l'emplacement de batterie et le circuit amplificateur.

4. Procédé selon l'une quelconque des revendications 1 à 3, la tension plus élevée étant une tension définie par des spécifications USB.

5. Procédé selon l'une quelconque des revendications précédentes, comprenant :
la génération (S1101), par l'unité de gestion de puissance, d'un signal de commande d'entrée de puissance ;
en réponse au fait que le signal de commande d'entrée de puissance est dans un état d'entrée directe, la fermeture (S1102) d'un trajet entre l'unité de gestion de puissance et le connecteur de bus série universel de telle sorte que la puissance est entrée à partir du connecteur USB vers l'unité de gestion de puissance directement ; et
en réponse au fait que le signal de commande d'entrée de puissance est dans un état d'entrée indirecte, la fermeture (S1102) d'un trajet entre l'unité de gestion de puissance et la batterie ou l'emplacement de batterie, la batterie ou l'emplacement de batterie étant connecté à un circuit de charge de telle sorte que la batterie est chargée par le circuit de charge avec la puissance fournie par le connecteur USB, puis la batterie ou l'emplacement de batterie fournit de la puissance à l'unité de gestion de puissance.

6. Procédé selon la revendication 5, comprenant en outre :
la surveillance d'une tension entrée à partir du connecteur USB ; et
la détermination de l'état du signal de commande d'entrée de puissance à générer sur la base de la tension surveillée.

7. Procédé selon les revendications 5 et 6 comprenant en outre :
la détermination que le signal de commande d'entrée de puissance à générer est dans l'état d'entrée directe lorsque la tension surveillée est à l'intérieur d'une première plage de tension ; et
la détermination que le signal de commande d'entrée de puissance à générer est dans l'état d'entrée indirecte lorsque la tension surveillée est à l'intérieur d'une seconde plage de tension,
la première plage de tension étant basée sur une tension de fonctionnement de la batterie, et la seconde plage de tension étant basée sur la tension définie par les spécifications USB.

8. Procédé selon la revendication 7, comprenant en outre :
la génération d'aucun signal de commande d'entrée de puissance lorsque la tension surveillée est à l'intérieur d'autres plages ; et
en réponse à aucun signal de commande d'entrée de puissance, la rupture du trajet entre l'unité de gestion de puissance et le connecteur USB et du trajet entre l'unité de gestion de puissance et la batterie ou l'emplacement de batterie.

9. Appareil comprenant des moyens pour réaliser les actions du procédé selon l'une quelconque des revendications 1 à 8.
